# EUROPEAN PATENT SPECIFICATION

(11) **EP 2 763 355 B1**
(45) Date of publication and mention of the grant of the patent: **14.09.2016**
(21) Application number: 12734330.9
(22) Date of filing: 17.02.2012
(51) Int. Cl.: H04L 12/46, H04Q 11/00

(54) **METHOD FOR TRANSMITTING DATA IN PASSIVE OPTICAL NETWORK, USER-SIDE EQUIPMENT, AND SYSTEM**
VERFAHREN ZUR DATENÜBERTRAGUNG IN EINEM PASSIVEN OPTISCHEN NETZWERK SOWIE BENUTZERAUSRÜSTUNG UND SYSTEM DAFÜR
PROCÉDÉ DE TRANSMISSION DE DONNÉES DANS UN RÉSEAU OPTIQUE PASSIF, ÉQUIPEMENT CÔTÉ UTILISATEUR ET SYSTÈME

(43) Date of publication of application: 06.08.2014
(73) Proprietor: Huawei Technologies Co., Ltd., Longgang District Shenzhen, Guangdong 518129 (CN)
(72) Inventor: KE, Bo, Shenzhen Guangdong 518129 (CN); MENG, Wanhong, Shenzhen Guangdong 518129 (CN)
(74) Representative: Maiwald Patentanwalts GmbH
(86) International application number: PCT/CN2012/071254
(87) International publication number: WO 2012/095040

(56) References cited:
- CN-A- 101 420 414
- CN-A- 101 459 656
- US-A1- 2010 208 747

## Description

### FIELD OF THE INVENTION

The present invention relates to the communications technologies, and in particular to a method for data transmission in a passive optical network, a user side device and a passive optical network system.

### BACKGROUND OF THE INVENTION

A passive optical network (Passive Optical Network, hereinafter referred to as PON) is network architecture adopting a point to multiple point (Point 2 Multiple Point, hereinafter referred to as P2MP) mode, and a PON is formed by three parts, which are an optical line terminal (Optical Line Terminal, hereinafter referred to as OLT), an optical distribution network (Optical Distribution Network, hereinafter referred to as ODN) and an optical network unit (Optical Network Unit, hereinafter referred to as ONU).

The OLT is a convergence device that is disposed at a central office end and configured to terminate a PON protocol; the ONU is located at a user side and is a user side device that provides a user device with various ports, the ONU may also be regarded as an optical network terminal (Optical Network Terminal, hereinafter referred to as ONT), the ONU and an ONT are collectively called a user side device, and a network connection is provided for the user device by disposing multiple ports in the user side device; and the ODN is used to provide a physical channel for communication between the OLT and the ONU. An Ethernet passive optical network (Ethernet Passive Optical Network, hereinafter referred to as EPON) and a gigabit passive optical network (Gigabit Passive Optical Network, hereinafter referred to as GPON) are two mainstream PON technologies.

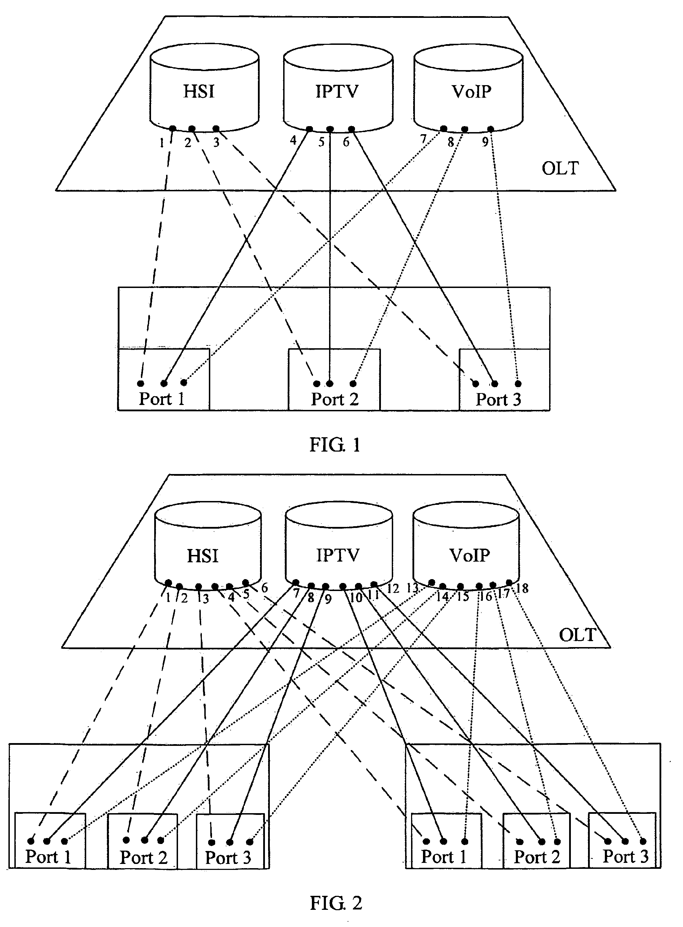

The foregoing passive optical networks can implement support for multiple types of services, such as a high speed Internet (High Speed Internet, hereinafter referred to as HSI) service, an Internet protocol television (Internet Protocol Television, hereinafter referred to as IPTV) service and a voice over Internet protocol (Voice over Internet Protocol, hereinafter referred to as VoIP) service. As shown in FIG. 1 and FIG. 2, multiple ports for connecting to a user device are disposed in a user side device of a PON, one service channel is configured on each port for each type of service, a service channel is connected to an OLT and used to bear transmission of a corresponding type of service between the user side device and the OLT, and each service channel needs to be configured with a corresponding service resource. For example, as shown in FIG. 1, each port can support three types of services, and 9 service channels in total are established, where service channels numbered 1 to 3 are service channels of an HSI service in ports 1 to 3, service channels numbered 4 to 6 are service channels of an IPTV service in ports 1 to 3, and service channels numbered 7 to 9 are service channels of a VoIP service in ports 1 to 3. However, as shown in FIG. 2, when a system includes two user side devices, 18 service channels need to be established, and are denoted by numbers 1 to 18.

However, in practical applications, for a port in the user side device, the port only accesses one type of service during a certain period of time, and meanwhile service channels configured for other types of services are in an idle status, causing a waste of service resources corresponding to service channels that are in the idle status. Therefore, in an existing PON technology, a case of wasting service resources exists between the user side device and the OLT.

CN101420414 discloses a method for differentiating a plurality of services in a G bit passive optical network system.

### SUMMARY OF THE INVENTION

Embodiments of the present invention provide a method for data transmission in a passive optical network, a user side device and a passive optical network system, and a computer program product, so as to avoid a waste of service resources between a user side device and an OLT in a PON technology.

One aspect of the embodiments of the present invention provides a method for data transmission in a passive optical network, one or more user side service convergence modules are disposed in a user side device, and a user side service convergence module is configured to process a service of one specific service type, where the method includes:
receiving, by the user side service convergence module, uplink service data from a port of the user side device, where the uplink service data is uplink service data of a service type corresponding to a service type processed by the user side service convergence module;
according to the received uplink service data, acquiring, by the user side service convergence module, a MAC address of a user device, identifier information of a network and identifier information of a network side service channel, and establishing a mapping between an identifier of an user side service channel and the following three, that is, the MAC address of the user device, the identifier information of the network, and the identifier information of the network side service channel; and
encapsulating, by the user side service convergence module, the uplink service data, and sending the encapsulated uplink service data through the network side service channel to an optical line terminal connected to the user side service convergence module, where the network side service channel is a channel for transmitting service data of the specific service type between the user side service convergence module of the user side device and the optical line terminal connected to it;
receiving, by the user side service convergence module and from a network side service channel, downlink service data sent by an optical line terminal, where the network side service channel is used to transmit service data of the specific service type between the user side service convergence module of the user side device and the optical line terminal;
decapsulating, by the user side service convergence module, the downlink service data, acquiring a MAC address of a user device, identifier information of the network and identifier information of the network side service channel according to the downlink service data, and acquiring a corresponding identifier of a user side service channel from a stored mapping according to the MAC address of the user device, the identifier information of the network and the identifier information of the network side service channel, where the user side service channel is a channel for transmitting the service data of the specific service type between a port of the user side device and the user side service convergence module; and
sending, by the user side service convergence module, the decapsulated downlink service data to the port of the user side device through the user side service channel.

Another aspect of the embodiments of the present invention provides a computer program product, including a computer program code, and when a computer unit executes the computer program code, the computer unit is enabled to execute actions corresponding to the foregoing method.

In the technical solutions provided in the present invention, two or more user side service convergence modules are disposed in the user side device of the PON, the user side service convergence module is configured to process a service of one specific service type, so that during transmission of the uplink service data, the user side service convergence module first receives the uplink service data from a port through the user side service channel, so that uplink service data of the same service type of each port can converge in the user side service convergence module, and further, the service convergence module sends the uplink service data to the OLT through the network side service channel, so that only one service channel needs to be established for one service type between the user side device and the OLT. In addition, a network side service convergence module receives various service types through a dedicated network side service channel, where a user side service convergence module located in the user side device converges services of a same service type, thereby effectively reducing a waste of service resources between the user side device and the OLT.

### BRIEF DESCRIPTION OF THE DRAWINGS

To illustrate technical solutions in embodiments of the present invention or in the prior art more clearly, the following briefly introduces accompanying drawings required for describing the embodiments or the prior art. Apparently, the accompanying drawings in the following description show some embodiments of the present invention, and persons of ordinary skill in the art can derive other drawings from these accompanying drawings without creative efforts.
FIG. 1 is a first schematic structural diagram of a passive optical network in the prior art;
FIG. 2 is a second schematic structural diagram of a passive optical network in the prior art;
FIG. 3 is a schematic flow chart of a method for data transmission in a passive optical network relating to the present invention;
FIG. 4 is a schematic flow chart of another method for data transmission in a passive optical network relating to the present invention;
FIG. 5 is a schematic apparatus diagram of a passive optical network system relating to the present invention;
FIG. 6 is a schematic flow chart of a data transmission method executed by an optical line terminal relating to the present invention;
FIG. 7 is a schematic flow chart of another data transmission method executed by an optical line terminal relating to the present invention;
FIG. 8 is a schematic apparatus diagram of a passive optical network system relating to the present invention;
FIG. 9 is a schematic structural diagram of a user side service convergence module according relating to the present invention; and
FIG. 10 is a schematic structural diagram of a network side service convergence module relating to the present invention.

### DETAILED DESCRIPTION OF THE EMBODIMENTS

To make objectives, technical solutions, and advantages of embodiments of the present invention clearer, technical solutions in the embodiments of the present invention are described clearly and completely in the following with reference to accompanying drawings in the embodiments of the present invention. Apparently, the described embodiments are merely part rather than all of the embodiments of the present invention. All other embodiments obtained by persons of ordinary skill in the art based on the embodiments of the present invention without creative efforts shall fall within the protection scope of the present invention.

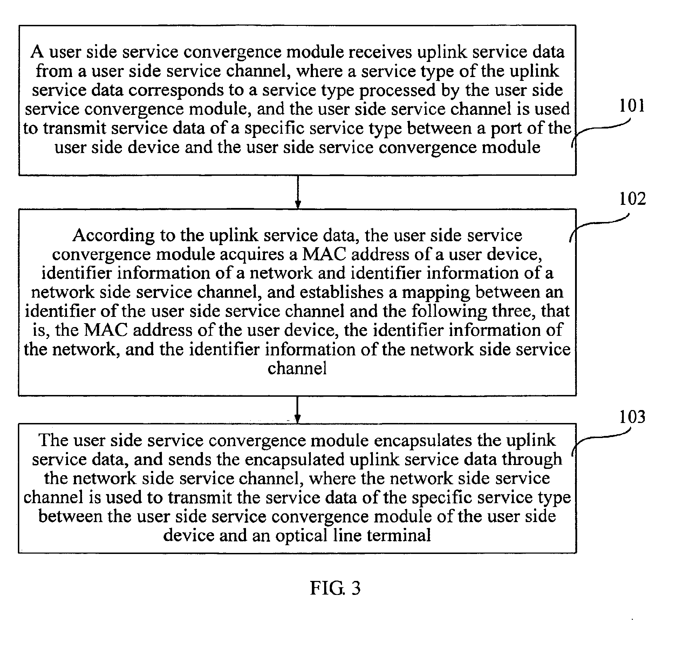

In view of a case of wasting service resources between a user side device in a PON technology and an OLT in the prior art, an embodiment of the present invention provides a technical solution. FIG. 3 is a schematic flow chart of a method for data transmission in a passive optical network in an embodiment of the present invention. In this embodiment, one or more user side service convergence modules are disposed in a user side device and each of the user side service convergence modules is configured to process a service of one specific service type. As shown in FIG. 3, this method includes the following steps:
Step 101: A user side service convergence module receives uplink service data from a user side service channel, a service type of the uplink service data corresponds to a service type processed by the user side service convergence module, and the user side service channel is used to transmit service data of a specific service type between a port of the user side device and the user side service convergence module.
Step 102: According to the uplink service data, the user side service convergence module acquires a MAC address of a user device, identifier information of a network and identifier information of a network side service channel, and establishes a mapping between an identifier of the user side service channel and the following three, that is, the MAC address of the user device, the identifier information of the network, and the identifier information of the network side service channel.
Step 103: The user side service convergence module encapsulates the uplink service data, and sends the encapsulated uplink service data through the network side service channel, and the network side service channel is used to transmit the service data of the specific service type between a user side service convergence module of the user side device and an optical line terminal.

In the embodiment of the present invention, one or more user side service convergence modules are disposed in a user side device of a PON, each of the user side service convergence modules is configured to process a service of one specific service type, so that during transmission of uplink service data, the uplink service data is first received from a port through a user side service channel, so that uplink service data of a same service type of each port can converge in a corresponding user side service convergence module that processes this service type, and further, the user side service convergence module sends the uplink service data to an OLT through a network side service channel, so that only one service channel needs to be established for one service type between the user side device and the OLT, thereby efficiently reducing a waste of service resources between the user side device and the OLT.

In the foregoing embodiment of the present invention, each of the user side service convergence module receives uplink service data of the specific service type, that is, uplink service data corresponding to its processing capability. Specifically, the service type of the uplink service data may be obtained by a port. Before step 101, the method further includes:
The port of the user side device acquires the service type according to a service characteristic of the uplink service data.
The port of the user side device sends the uplink service data to the corresponding user side service convergence module through the user side service channel corresponding to the service type.

In the foregoing embodiment of the present invention, the specific service type may be one of an HSI service, an IPTV service and a VoIP service, that is, the user side device may include three user side service convergence modules to process the three services. For example, a first user side service convergence module processes the HIS service, a second user side service convergence module processes the IPTV service, and a third user side service convergence module processes the VoIP service. In addition, for other new service types, corresponding user side service convergence modules may also be added. During a specific implementation process, different user side service convergence modules may be implemented by different hardware entities, and may also be implemented by different functional instances in a same hardware entity.

In the embodiment of the present invention, the user side device includes two or more ports, where each port supports various service types. In this embodiment, a user side service channel between a port and a corresponding user side service convergence module is established for each service type, so that the port can send uplink service data to the corresponding user side service convergence module after identifying a service type. For uplink service data of different service types, different types of service data have different service characteristics in packets. For example, a service domain identifier in Ethernet encapsulation or IP encapsulation is different. For the HSI service, a VLAN value may be set to 11; for the IPTV service, a VLAN value may be set to 12; and for the VoIP service, a VLAN value may be set to 13. Therefore, the port can easily identify the service type according to a service characteristic.

In the foregoing embodiment of the present invention, the user side service convergence module learns a forwarding entry during a process of forwarding the uplink service data, that is, acquire the MAC address of the user device, the identifier information of the network and the identifier information of the network side service channel. The foregoing network identifier can be denoted by VLAN, and the identifier information of the network side service channel can be denoted by a GEM id or an LLID. Further, a mapping between the identifier of the user side service channel and the following three, that is, the MAC address of the user device, the identifier information of the network, and the identifier information of the network side service channel, is established for use in table lookup during transmission of downlink service data to implement correct forwarding. The MAC address of the user device may be regarded as a source address of the uplink service data. The identifier information of the network is an identifier of a target network of transmission of the uplink service data, and it is related to the service type. During processing of the downlink service data, the MAC address of the user device may be regarded as a destination address of the downlink service data. For the IPTV service, the MAC address of the user device may be a MAC address of a set top box.

In step 103 of the foregoing embodiment of the present invention, the uplink service data is encapsulated. For a GPON technology or an EPON technology, this step may specifically be that the user side service convergence module encapsulates the uplink service data in a gigabit passive optical network encapsulation mode (GPON encapsulation mode, hereinafter referred to as GEM); or
that the user side service convergence module encapsulates the uplink service data in a logical link identifier (Logical Link Identifier, hereinafter referred to as LLID) mode.

In the foregoing embodiment of the present invention, before encapsulation processing of the uplink service data in step 103, the service characteristic of the uplink service data may be further processed, so as to differentiate that the uplink service data is sent by a different user device. A service priority of the user device may be rewritten to differentiate different user devices, or the service characteristic may be rewritten. For example, the service domain identifier is rewritten. For device A, a VLAN value corresponding to its HSI service is modified to 111, a VLAN value corresponding to its IPTV service is modified to 112, and a VLAN value corresponding to its VoIP service is modified to 113. For user device B, a VLAN value corresponding to its HSI service is modified to 211, a VLAN value corresponding to its IPTV service is modified to 212, and a VLAN value corresponding to its VoIP service is modified to 213. Therefore, the service characteristic can not only represent its service type, but also can represent a different user device.

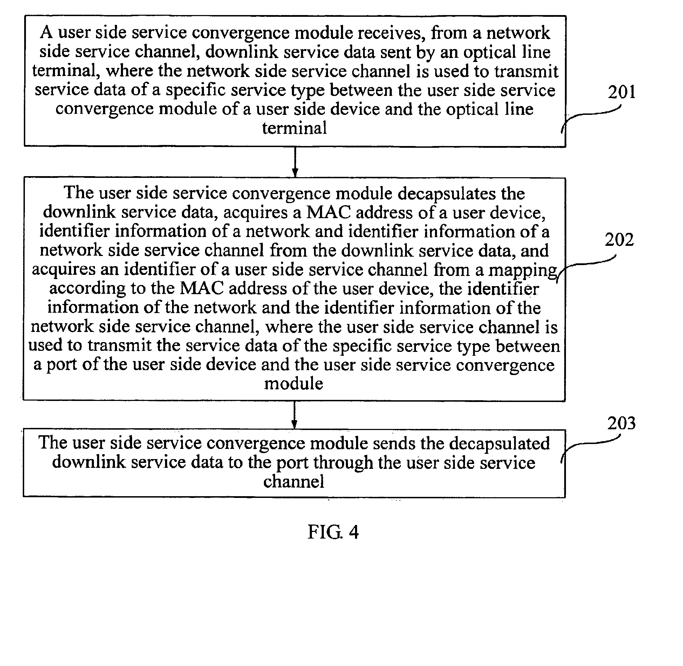

Corresponding to FIG. 3, an embodiment of the present invention further provides a corresponding transmission method of downlink service data. Specifically, FIG. 4 is a schematic flow chart of another method for data transmission in a passive optical network according to the embodiment of the present invention. One or more user side service convergence modules are disposed in a user side device in this embodiment, where each of the user side service convergence modules is configured to process a service of one specific service type. As shown in FIG. 4, the method includes the following steps.
Step 201: A user side service convergence module receives, from a network side service channel, downlink service data sent by an optical line terminal. The network side service channel is used to transmit service data of a specific service type between the user side service convergence module of the user side device and the optical line terminal.
Step 202: The user side service convergence module decapsulates the downlink service data, acquires an MAC address of a user device, identifier information of a network and identifier information of the network side service channel, and acquires an identifier of a user side service channel from a mapping according to the MAC address of the user device, the identifier information of the network and the identifier information of the network side service channel. The user side service channel is used to transmit the service data of the specific service type between a port of the user side device and the user side service convergence module.
Step 203: The user side service convergence module sends the decapsulated downlink service data to the port through the user side service channel.

In this embodiment of the present invention, a user side service convergence module for processing a service of a specific service type is disposed in the user side device, and at the same time, a network side service channel for transmitting a service data of the specific service type is disposed between the user side service convergence module and the optical line terminal, so that downlink service data that needs to be transmitted to any port may be transmitted to user side service convergence modules through different network side service channels according to service types, and only network side service channels of which the number is equal to that of service types need to be disposed between the user side device and the optical line terminal, which can efficiently reduce the number of service channels between the user side device and the optical line terminal and lower a waste of service resources between the two.

In the foregoing embodiment of the present invention, the specific service type may be any one of an HSI service, an IPTV service and a VoIP service. At the same time, in the user side device and for the three services, three user side service convergence modules may be disposed, and three corresponding network side service channels are established.

In addition, in step 202, when a corresponding identifier of a user side service channel cannot be found from a prestored mapping, the decapsulated downlink service data may be sent in a broadcasting manner to all ports connected to this user side service convergence module.

That is, the downlink service data is forwarded according to a forwarding entry learned during a process of processing uplink data. In addition, if the user side service convergence module does not find the identifier of the corresponding first service channel, the downlink service data is sent to all ports in the broadcasting manner.

For two mainstream PON technologies, namely, GPON and EPON, the decapsulating the downlink service data in step 202 in the foregoing embodiment may specifically be that the user side service convergence module decapsulates the downlink service data in a GEM mode; or
that the user side service convergence module decapsulates the downlink service data in an LLID mode.

In the embodiment of the present invention, before sending the decapsulated downlink service data to the port in step 203, the method may further include processing a service characteristic in the downlink service data. This processing process corresponds to processing of a service characteristic in uplink service data. That is, during transmission of the uplink service data, if a service priority and a VLAN value are rewritten, the service priority and the VLAN value are rewritten to original values in this step.

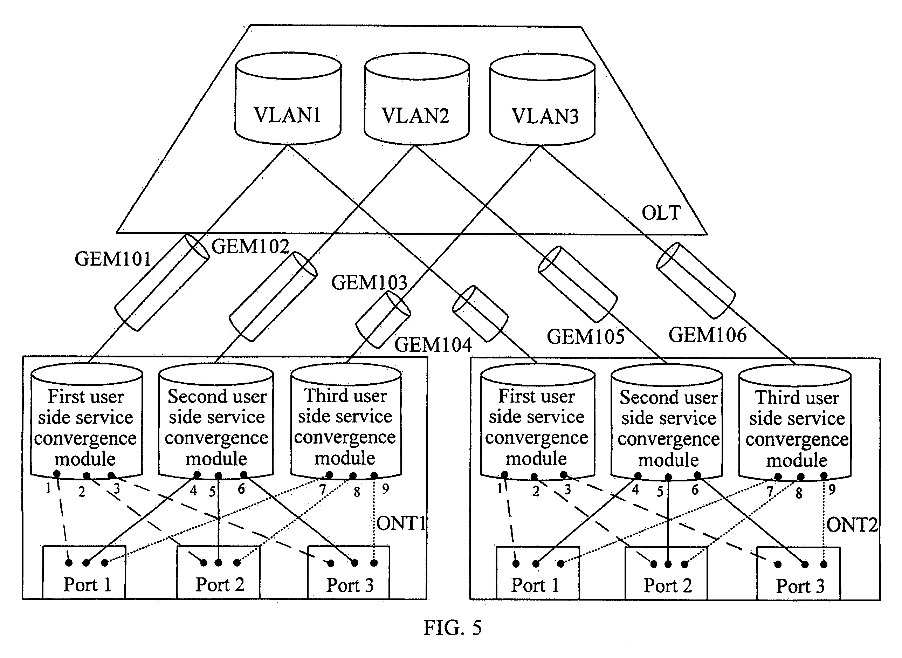

FIG. 5 is a schematic apparatus diagram of a passive optical network system according to a specific embodiment of the present invention. A user side device in this embodiment is an ONT, and definitely, may also be an ONU or another similar device. As shown in FIG. 5, three ports and three user side service convergence modules are disposed in each ONT. For a case where four or more ports are disposed in the OTN, the technical solution in the present invention is also applicable. Generally, the number of user side service convergence modules corresponds to the number of service types supported by the ONT. Specifically, ONT1 is taken as an example for illustration. The foregoing three ports can provide one or more of an HSI service, an IPTV service or a VoIP service. The three user side service convergence modules are configured to process a service of one of the service types each. A user side service channel is disposed between each port and each user side service convergence module, so as to perform transmission of service data of a service type corresponding to this user side service convergence module. The three ports are denoted by port 1, port 2 and port 3, and user side service channels are denoted by numbers 1 to 9. In addition, for each user side service convergence module, one corresponding network side service channel is disposed to connect to an OLT. Three network side service channels are denoted by GEM101, GEM102 and GEM103, and specifically are connected to processing modules of corresponding services which may be represented by identifier information of a local area network. For example, VLAN1 denotes the HSI service, VLAN2 denotes the IPTV service, and VLAN3 denotes the VoIP service. In addition to denoting by the VLAN, a pseudo wire emulation edge-to-edge (Pseudo Wire Emulation Edge-to-Edge, hereinafter referred to as PWE3), or a virtual private Lan service (Virtual Private Lan Service, hereinafter referred to as VPLS) may be used for denotation.

In a specific application process, in a case of the uplink service data transmission, for example, the HSI service, assuming a PC is connected to port 1 of the ONT, data of the PC reaches a first user side service convergence module through a user side service channel numbered 1, and is sent through a network side service channel GEM101 to a corresponding service processing module VLAN1 in the OLT, namely, a HSI service module; assuming the PC is connected to port 2 of the ONT, the data of the PC reaches the same user side service convergence module, that is, the first user side service convergence module, through a user side service channel numbered 2, and is sent to through the network side service channel GEM101 the corresponding service processing module VLAN1 in the OLT, namely, the HSI service module; and assuming the PC is connected to port 3 of the ONT, the data of the PC reaches the same user side service convergence module through a user side service channel numbered 3, and is sent through the network side service channel GEM101 to the corresponding HSI service module in the OLT.

In addition, if the IPTV service needs to be used, assuming a set top box is connected to port 1 of the ONT, IPTV uplink service data reaches a second user side convergence module through a user side service channel numbered 4, and is sent through a network side service channel GEM102 to a corresponding service processing module in the OLT, namely, an IPTV service module denoted by VLAN2; assuming the set top box is connected to port 2 of the ONT, the IPTV uplink service data reaches the same user side convergence module through a user side service channel numbered 5, and is sent through the network side service channel GEM102 to the corresponding service processing module in the OLT, namely, the IPTV service module denoted by the VLAN2; assuming the set top box is connected to port 3 of the ONT, the IPTV uplink service data reaches the same user side service convergence module through a user side service channel numbered 6, and is sent through the network side service channel GEM 102 to the corresponding service processing module in the OLT, namely, the IPTV service module denoted by the VLAN2.

If the VoIP service needs to be used, assuming a VoIP service terminal-integrated access device is connected to port 1 of the ONT, VoIP uplink service data reaches a third user side service convergence module through a user side service channel numbered 7, and is sent through a network side service channel GEM103 to a corresponding service processing module in the OLT, namely, a VoIP service module denoted by VLAN3; assuming the IAD is connected to port 2, the VoIP uplink service data reaches the same user side service convergence module through a user side service channel numbered 8, and is sent through the network side service channel GEM103 to the corresponding service processing module in the OLT, namely, the VoIP service module denoted by the VLAN3; assuming the IAD is connected to port 3 of the ONT, so the VoIP uplink service data reaches the same user side service convergence module through a user side service channel numbered 9, and is sent through the network side service channel GEM103 to the corresponding service processing module in the OLT, namely, the VoIP service module denoted by the VLAN3.

In addition, for the downlink service data, downlink service data of the HSI service reaches, through the network side service channel GEM101, the corresponding first user side service convergence module in the ONT, the corresponding first user side service convergence module sends the downlink service data to the PC that is connected to the port through the user side service channel numbered 1, 2 or 3. Specifically, the first user side service convergence module may determine, by searching a forwarding entry, which user side service channel the downlink service data is sent to, and when information of the user side service channel cannot be found through the forwarding entry, the downlink service data may be delivered in a broadcasting manner to all user side service channels connected to the user side service convergence module. Downlink service data of the IPTV service reaches, through the network side service channel GEM102, the corresponding second user side service convergence module in the ONT, the second user side service convergence module sends the downlink service data to the set top box connected to the port through the user side service channel numbered 4, 5 or 6. Downlink service data of the VoIP service reaches through the network side service channel GEM103 the corresponding third user side service convergence module in the ONT, the third user side service convergence module sends the downlink service data of the VoIP service to the IAD connected to the port through the user side service channel numbered 7, 8 or 9.

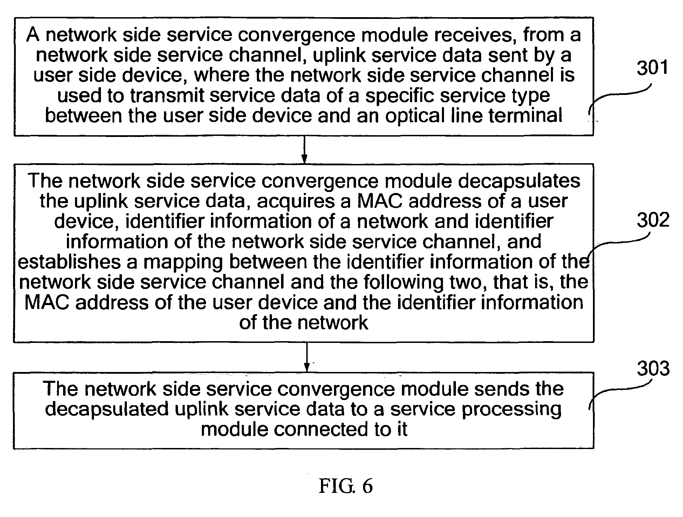

In each of the foregoing embodiments, the user side service convergence module is disposed in the user side device, and further a network side service convergence module may be disposed in the optical line terminal. FIG. 6 is a schematic flow chart of a data transmission method executed by an optical line terminal according to an embodiment of the present invention. In the embodiment, one or more network side service convergence modules are disposed in the optical line terminal. Each of the network side service convergence modules is configured to process a service of one specific service type, and is connected to a corresponding service processing module in the optical line terminal. On the basis of executing steps shown in FIG. 3, this method further includes the following steps.
Step 301: A network side service convergence module receives, from a network side service channel, uplink service data sent by a user side device, where the network side service channel is used to transmit service data of a specific service type between the user side device and the optical line terminal.
Step 302: The network side service convergence module decapsulates the uplink service data, acquires a MAC address of a user device, identifier information of a network and identifier information of the network side service channel, and establishes a mapping between the identifier information of the network side service channel and the following two, that is, the MAC address of the user device and the identifier information of the network.
Step 303: The network side service convergence module sends the decapsulated uplink service data to a service processing module connected to it.

The network side service convergence module in this embodiment receives, through a dedicated network side service channel, service data of a service type corresponding to the service type processed by the network side service convergence module. A user side service convergence module in the user side device converges services of a same service type. In the OLT, the network side service convergence module may also converge uplink service data which is of a same service type and is sent by multiple user side devices. For a service of any service type, only one service channel needs to be established between a corresponding network side service convergence module in the OLT and the user side service convergence module in the user side device. The technical solution in the embodiment of the present invention can reduce the number of service channels that need to be configured between the OLT and the ONT/ONU, lower complexity of service channel configuration, improve configuration efficiency of a service channel during channel configuration, and efficiently reduce a waste of service resources through use in combination with the user side service convergence module in the user side device.

The specific service type in the foregoing embodiment of the present invention may as well be, for example, one or more of an HSI service, an IPTV service or a VoIP service.

In step 302 of the present invention, the network side service convergence module may also acquire the MAC address of the user device, the identifier information of the network and the identifier information of the network side service channel from the uplink service data, and establish the mapping between the identifier information of the network side service channel and the following two, that is, the MAC address of the user device and the identifier information of the network; that is, learn a forwarding entry for use during transmission of downlink service data.

In addition, for two mainstream PON technologies, namely, GPON and EPON, in step 302 in the foregoing embodiment of the present invention, that the network side service convergence module decapsulates the uplink service data may include the following two cases:
The network side service convergence module performs GEM decapsulation on the uplink service data, or the network side service convergence module decapsulates the uplink service data in an LLID mode.

In addition, in the embodiment of the present invention, for the decapsulated uplink service data, a service characteristic of the uplink service data may be further processed, so as to differentiate that the uplink service data is sent by a different user device. A service priority of the user device may be rewritten to differentiate different user devices, or the service characteristic may be rewritten. For example, a service domain identifier is rewritten. For device A, a VLAN value corresponding to its HSI service is modified to 111, a VLAN value corresponding to its IPTV service is modified to 112, and a VLAN value corresponding to its VoIP service is modified to 113. For user device B, a VLAN value corresponding to its HSI service is modified to 211, a VLAN value corresponding to its IPTV service is modified to 212, and a VLAN value corresponding to its VoIP service is modified to 213. Therefore, the service characteristic can not only represent its service type, but also can represent a different user device.

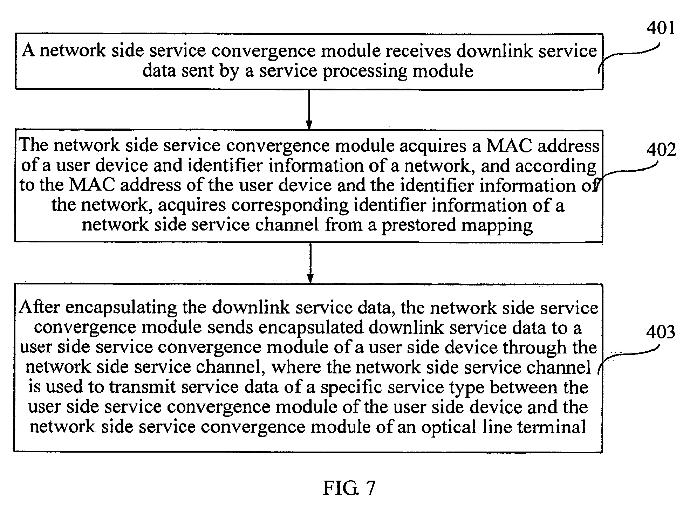

FIG. 7 is a schematic flow chart of another data transmission method executed by an optical line terminal according to an embodiment of the present invention. In this embodiment, one or more network side service convergence modules are disposed in the optical line terminal, and each of the network side service convergence modules is configured to process a service of one specific service type, and is connected to a service processing module of a corresponding service type. This method is a downlink processing process corresponding to the previous embodiment and includes the following steps:
Step 401: A network side service convergence module receives downlink service data sent by a service processing module.
Step 402: The network side service convergence module acquires a MAC address of a user device and identifier information of a network from the downlink service data, and according to the MAC address of the user device and the identifier information of the network, acquires corresponding identifier information of a network side service channel from a prestored mapping.
Step 403: After encapsulating the downlink service data, the network side service convergence module sends the encapsulated downlink service data to a user side service convergence module of a user side device through the network side service channel, where the network side service channel is used to transmit service data of a specific service type between the user side service convergence module of the user side device and the network side service convergence module of the optical line terminal.

In this embodiment, the network side service convergence module is disposed in the OLT, and may receive downlink service data that is sent through a first service channel by a specific service processing module of the optical line terminal, and send the downlink service data to the user side service convergence module of the user side device through the network side service channel. This network side service channel is used to transmit the service data of the specific service type between the user side service convergence module of the user side device and the network side convergence device of the optical line terminal, so that only one service channel needs to be established between the OLT and the user side device for a service of each service type. Through technical solution of performing service convergence in the OLT and the user side device, configuration efficiency of a service channel during channel configuration can be improved, and a waste of service resources can be lowered.

The specific service type in the foregoing embodiment of the present invention may be, for example, one or more of an HSI service, an IPTV service or a VoIP service.

In addition, in step 403, when the identifier of the corresponding network side service channel cannot be found from the prestored mapping, the encapsulated downlink service data may be sent in a broadcasting manner to all user side service convergence modules connected to it.

In addition, for two mainstream PON technologies, namely, GPON and EPON, in step 403 in the foregoing embodiment of the present invention, that the network side service convergence module encapsulates the downlink service data includes:
that the network side service convergence module performs GEM encapsulation on the downlink service data; or
that the network side service convergence module encapsulates the downlink service data in an LLID mode.

In the embodiment of the present invention, for the downlink service data before encapsulation, switching of a service characteristic in the downlink service data is further included. The service characteristic is processed according to a service requirement. This processing process corresponds to processing of a service characteristic in uplink service data. That is, during transmission of the uplink service data, if a service priority and a VLAN value are rewritten, the service priority and the VLAN value are rewritten to original values in this step.

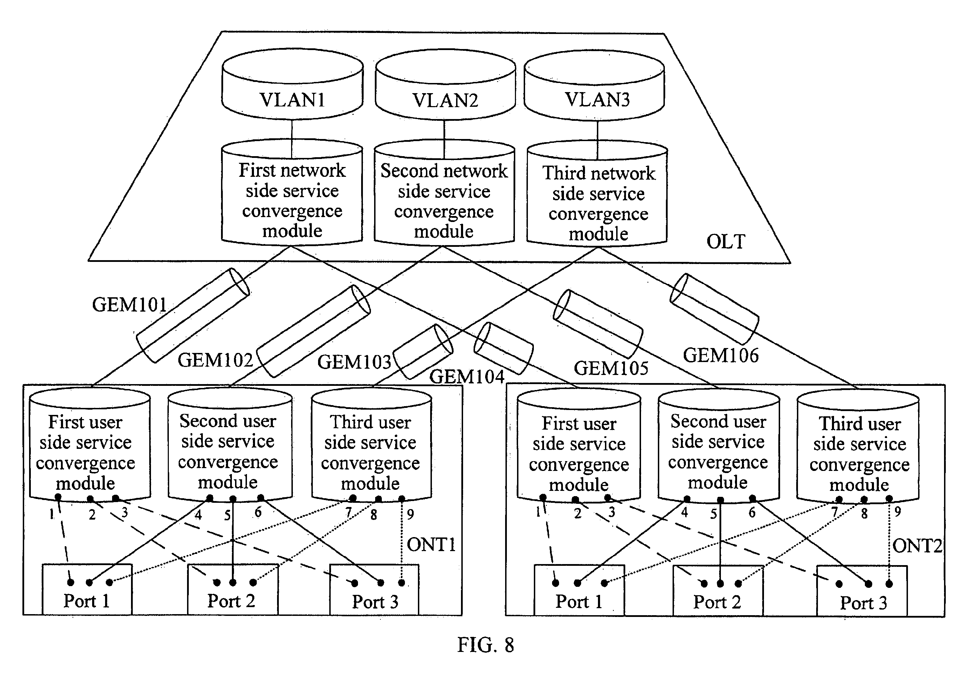

FIG. 8 is a schematic apparatus diagram of a passive optical network system according to another specific embodiment of the present invention. As shown in FIG. 8, this network at least includes two user devices, namely, ONT1 and ONT2. At least two ports are disposed in ONT1, and three ports are shown in FIG. 8. The three ports may provide one or more of an HSI service, an IPTV service or a VoIP service. Three user side service convergence modules are disposed in ONT1 to correspond to the three types of services supported by the ONT. Three corresponding network side service convergence modules are disposed in an OLT to correspond to all services supported by ONTs connected to this OLT. Specifically, the three user side service convergence modules are configured to process a service of one service type each. A user side service channel is disposed between each port and each user side service convergence module, so as to perform transmission of service data of a service type corresponding to this user side service convergence module. Three ports are denoted by port 1, port 2 and port 3. User side service channels are denoted by numbers 1 to 9. In addition, for each user side service convergence module, one network side service channel is disposed to connect to a corresponding network side service convergence module in the OLT. Three network side service channels are denoted by GEM101, GEM102 and GEM103. In addition, ONT2 is disposed in the same way as the ONT1, and the difference is in that network side service channels for different service types between user side convergence modules and network side service convergence modules are denoted by GEM104, GEM105 and GEM106, for differentiation from GEM101 to GEM103. In addition, a first service channel is disposed between each network side service convergence module and a corresponding service processing module. In this embodiment, the service processing module can be represented by identifier information of a local area network. For example, VLAN1 denotes the HSI service, VLAN2 denotes the IPTV service, and VLAN3 denotes the VoIP service.

In an application process of the specific embodiment of the present invention, a processing process of a user side service convergence module on uplink service data and downlink service data is similar to the processing process of the user side service convergence module in the embodiment shown in FIG. 5. Specifically, the processing process on the uplink service data and the downlink service data is as follows:
For the uplink service data, if the HSI service needs to be used, assuming a PC is connected to port 1 of ONT1, uplink service data of the PC reaches a first user side service convergence module through a user side service channel numbered 1, and then reaches, through the network side service channel GEM101, a network side service convergence module of the OLT, namely, a first network side service convergence module, and then reaches, through a first service channel, an HSI service processing module in the OLT. Assuming the PC is connected to port 2 of the ONT1, the uplink service data of the PC reaches, through a user side service channel numbered 2, the same user side service convergence module, namely, the first user side service convergence module, and then reaches, through the network side service channel GEM101, the same first network side service convergence module in the OLT, and then is sent through the first service channel to the service processing module of the HSI service in the OLT, and is sent upward by this service processing module. Assuming the PC is connected to port 3 of the ONT1, the uplink service data of the PC reaches the same first user side service convergence module through a user side service channel numbered 3, and then reaches the same first network side service convergence module through the network side service channel GEM101, and then is sent through the first service channel to the service processing module of the HSI service in the OLT, and is sent upward by this service processing module. There are same processing methods for the IPTV service and the VoIP service.

For the downlink service data, in a case of the HSI service, after being received by the corresponding service processing module in the OLT, the downlink service data reaches the corresponding network side service convergence module through the corresponding first service channel, and the network side service convergence module determines, by searching a forwarding entry, whether to forward the downlink service data to ONT1 or to ONT2. If the downlink service data is to be forwarded to ONT1, the encapsulated downlink service data reaches the first user side service convergence module of ONT1 through the network side service channel GEM101. The first user side service convergence module of ONT1 searches for a corresponding user side service channel (one of those numbered 1, 2 and 3) according to the forwarding entry learned previously and forwards the downlink service data to a corresponding port. If the downlink service data is to be forwarded to ONT2, the encapsulated downlink service data reaches a first user side service convergence module of ONT2 through a network side service channel GEM104, the first user side service convergence module of ONT2 searches for a corresponding user side service channel (one of those numbered 1, 2 and 3) according to a forwarding entry learned previously and forwards the downlink service data to a corresponding port through the determined user side service channel. In addition, processing procedures are similar for the IPTV service or the VoIP service.

Another aspect of the embodiments of the present invention provides a computer program product, including a computer program code, and when a computer unit executes the computer program code, the computer unit is enabled to execute actions corresponding to the foregoing method embodiment.

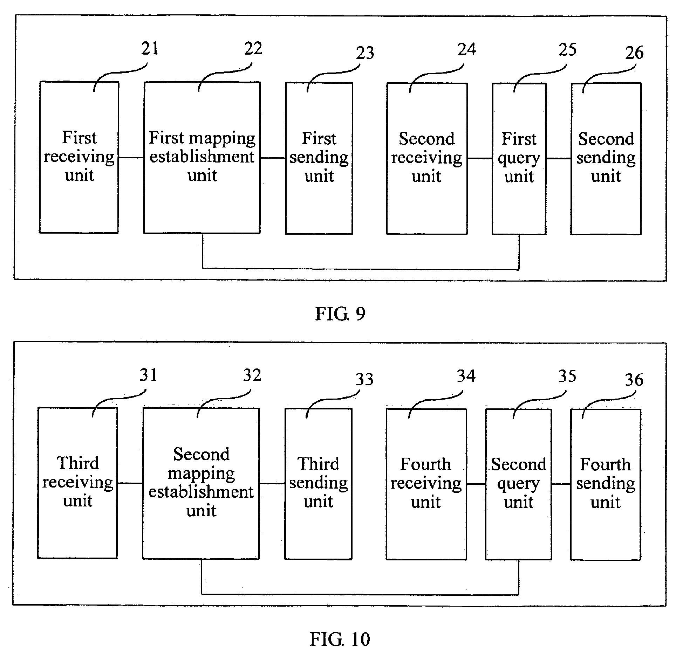

An embodiment of the present invention further provides a user side device. The user side device at least includes two ports and one or more user side service convergence modules. A port is configured to receive uplink service data from a user, acquire a service type according to a service characteristic of the uplink service data, and send the uplink service data to a corresponding user side service convergence module through a user side service channel corresponding to the service type. The user side service channel is used to transmit service data of a specific service type between the port of the user side device and the user side service convergence module. The user side service convergence module is configured to process a service of one specific service type. FIG. 9 is a schematic structural diagram of a user side service convergence module according to the embodiment of the present invention. As shown in FIG. 9, the user side service convergence module includes: a first receiving unit 21, a first mapping establishment unit 22 and a first sending unit 23, where the three modules are configured to implement processing of uplink service data; and a second receiving unit 24, a first query unit 25 and a second sending unit 26. The first receiving unit 21 is configured to receive, from a user side service channel, the uplink service data from a port connected to the first receiving unit 21. A service type of the uplink service data corresponds to a service type processed by the user side service convergence module. The user side service channel is used to transmit service data of the specific service type between a port of a user side device and the user side service convergence module. The first mapping establishment unit 22 is configured to acquire a MAC address of a user device, identifier information of a network and identifier information of a network side service channel according to the uplink service data, and establish a mapping between an identifier of the user side service channel and the following three, that is, the MAC address of the user device, the identifier information of the network, and the identifier information of the network side service channel. The first sending unit 23 is configured to encapsulate the uplink service data and send the encapsulated uplink service data to an optical line terminal. The user side device may send the encapsulated uplink service data to the OLT through the network side service channel, where the network side service channel is used to transmit the service data of the specific service type between the user side service convergence module of the user side device and the optical line terminal. The second receiving unit 24 is configured to receive downlink service data sent by the optical line terminal. The receiving may be receiving from the network side service channel. The network side service channel is used to transmit the service data of the specific service type between the user side service convergence module of the user side device and the optical line terminal. The first query unit 25 is configured to decapsulate the downlink service data, acquire a MAC address of a user device, identifier information of a network and the identifier information of the network side service channel according to the downlink service data, and acquire a corresponding identifier of a user side service channel from a prestored mapping according to the MAC address of the user device, the identifier information of the network and the identifier information of the network side service channel. The user side service channel is used to transmit the service data of the specific service type between a port of the user side device and the user side service convergence module. The second sending unit 26 is configured to send, through the user side service channel, the decapsulated downlink service data to the port connected to the second sending unit 26.

The user side device provided in the foregoing embodiment of the present invention includes at least one user side service convergence module. The user side service convergence module is configured to process a service of one specific service type. Its first mapping establishment unit can establish, during the transmission of uplink service data, a mapping between and an identifier of the user side service channel and the following three, that is, a MAC address of a user device, identifier information of a network, and identifier information of a network side service channel, and can further perform transmission of downlink service data according to the mappings, so that services of a same service type in the user side device converge in a corresponding user side service convergence module, and only network side service channels of which the number is equal to that of service types need to be established between the user side device and the OLT. In a case of multiple ports, the number of service channels that need to be disposed is reduced, which can not only reduce configuration complexity during service channel configuration, but also can efficiently lower a waste of service resources caused by the service channel configuration.

In the foregoing embodiment of the present invention, the user side device is an ONU or an ONT, and the service of the specific service type may include one or more of a high speed Internet service, an Internet protocol television service or a voice over Internet protocol service.

In addition, in the foregoing embodiment, that the first sending unit is configured to encapsulate the uplink service data may specifically be that the first sending unit is configured to encapsulate the uplink service data in a gigabit passive optical network encapsulation mode or in a logic link identifier mode. That the first query unit is configured to decapsulate the downlink service data may specifically be that the first query unit is configured to decapsulate the downlink service data in the gigabit passive optical network encapsulation mode or in the logic link identifier mode.

An embodiment of the present invention further provides a passive optical network system. The passive optical network system includes an optical line terminal and at least two user side devices connected to the optical line terminal. A user side device is the user side device provided in the foregoing embodiment.

On the basis of the foregoing embodiment, the optical line terminal may include one or more service processing modules configured to process services of specific service types, and a corresponding number of network side service convergence modules. Generally, services of multiple service types are included, so there are multiple service processing modules and multiple network side service convergence modules. As shown in FIG. 10, a network side service convergence module includes a third receiving unit 31, a second mapping establishment unit 32 and a third sending unit 33, and a fourth receiving unit 34, a second query unit 35 and a fourth sending unit 36. The third receiving unit 31 is configured to receive uplink service data sent by a user side device, and the receiving may be receiving from a network side service channel. The network side service channel is used to transmit service data of a specific service type between the user side device and the optical line terminal. The second mapping establishment unit 32 is configured to decapsulate the uplink service data, acquire a MAC address of a user device, identifier information of a network and identifier information of the network side service channel, and establish a mapping between the identifier information of the network side service channel and the following two, that is, the MAC address of the user device and the identifier information of the network. The third sending unit 33 is configured to send the decapsulated uplink service data to a service processing module connected to it. The fourth receiving unit 34 is configured to receive downlink service data sent by the optical line terminal, and the receiving may be receiving from the service processing module. The second query unit 35 is configured to decapsulate the downlink service data, acquire a MAC address of a user device and identifier information of a network, and acquire, according to the MAC address of the user device and the identifier information of the network, identifier information of the network side service channel from a prestored mapping. The fourth sending unit 36 is configured to send the decapsulated downlink service data to the user side device, and the sending may be sending through the network side service channel.

In the embodiment of the present invention, the network side service convergence module is disposed in the optical line terminal. This network side service convergence module is configured to process a service of one specific service type, thereby implementing convergence of uplink service data which is of a same service type and sent by multiple user side devices. Meanwhile, for a service of each specific service type, a corresponding network side service channel is established between the user side service convergence module of the user side device and the network side convergence module of the optical line terminal, so that only network side service channels of which the number is equal to that of service types need to be established, the number of service channels that need to be configured is reduced, which can not only reduce configuration complexity during service channel configuration, but also can lower a waste of service resources caused by the service channel configuration.

In the method for data transmission in a PON system, the user side device and the passive optical network system which are provided in the embodiments of the present invention, the user side service convergence module for processing a service of a specific service type is disposed in the user side device, so that services of a same type in the user device can converge. Further, the network side service convergence module is disposed in the OLT, so as to implement convergence of services of a same type of multiple user side devices, so that only one service channel needs to be established for each service type between each user side device and the OLT. Therefore, the number of service channels that need to be established between the OLT and the user side device can be effectively reduced. Further configuration complexity of channel configuration can be lowered, a demand for service resources between the OLT and the user side device can be reduced, and a waste of service resources is reduced.

Persons of ordinary skill in the art can understand that all or part of the steps of the foregoing method embodiments may be implemented by a program instructing relevant hardware. The program may be stored in a computer readable storage medium. When the program runs, the steps of the methods in the embodiments are performed. The storage medium may include various media that are capable of storing program codes, such as a ROM, a RAM, a magnetic disk, or an optical disk.

Finally, it should be noted that the foregoing embodiments are merely used for illustrating the technical solutions of the present invention, but not intended to limit the present invention. Although the present invention is described in detail with reference to the foregoing embodiments, persons of ordinary skill in the art should understood that they can still make modifications to the technical solutions described in the foregoing embodiments, or make equivalent substitutions to some technical features of the technical solutions; such modifications and equivalent substitutions do not make essence of corresponding technical solutions depart from the scope of the technical solutions of the embodiments of the present invention.

## Claims

1. A method for data transmission in a passive optical network, wherein one or more user side service convergence modules are disposed in a user side device, a user side service convergence module is configured to process a service of one specific service type, the method comprising:
receiving (101), by a first user side service convergence module of the one or more user side service convergence modules, uplink service data from a port of the user side device, wherein the uplink service data is uplink service data of a service type corresponding to a service type processed by the first user side service convergence module; and being **characterized by** :
acquiring (102), by the first user side service convergence module, a MAC address of a user device, identifier information of a network and identifier information of a network side service channel according to the received uplink service data, and establishing a mapping between an identifier of a user side service channel and the MAC address of the user device, the identifier information of the network, and the identifier information of the network side service channel; and
encapsulating (103), by the first user side service convergence module, the uplink service data, and sending the encapsulated uplink service data through the network side service channel to an optical line terminal, OLT, connected to the first user side service convergence module, wherein the network side service channel is a channel for transmitting the service of the specific service type between the first user side service convergence module of the user side device and the OLT connected to it;
receiving (201), by the first user side service convergence module, downlink service data through a network side service channel from the OLT, wherein the network side service channel is used to transmit service data of the specific service type between the first user side service convergence module of the user side device and the OLT;
decapsulating (202), by the first user side service convergence module, the downlink service data, acquiring a MAC address of a user device, identifier information of a network and identifier information of the network side service channel according to the downlink service data, and acquiring a corresponding identifier of a user side service channel from a stored mapping according to the MAC address of the user device, the identifier information of the network and the identifier information of the network side service channel, wherein the user side service channel is a channel for transmitting the service data of the specific service type between a port of the user side device and the user side service convergence module; and
sending (203), by the first user side service convergence module, the decapsulated downlink service data to the port of the user side device through the user side service channel.

2. The transmission method according to claim 1, wherein before the receiving, by the first user side service convergence module, uplink service data from a port of the user side device, the method further comprises:
acquiring, by the port of the first user side device, the service type according to a service characteristic of the uplink service data; and
sending, by the port of the first user side device, the uplink service data to the corresponding user side service convergence module through the user side service channel corresponding to the service type.

3. The transmission method according to claim 1 or 2, wherein the service of the specific service type is one or more of a high speed Internet service, an Internet protocol television service or a voice over Internet protocol service.

4. The transmission method according to any one of claims 1 to 3, wherein the encapsulating, by the first user side service convergence module, the uplink service data comprises:
encapsulating, by the first user side service convergence module, the uplink service data in a gigabit passive optical network encapsulation mode; or
encapsulating, by the first user side service convergence module, the uplink service data in a logic link identifier mode.

5. The transmission method according to any one of claims 1 to 4, wherein the user side device is an optical network unit ONU or an optical network terminal ONT.

6. A computer program product, comprising a computer program code, wherein when a computer unit executes the computer program code, the computer unit executes the method according to any of claims 1 to 5.

## Patentansprüche

1. Verfahren zur Datenübertragung in einem passiven optischen Netz, wobei ein oder mehrere anwenderseitige Dienstkonvergenzmodule in einer anwenderseitigen Vorrichtung angeordnet sind, ein anwenderseitiges Dienstkonvergenzmodul konfiguriert ist, einen Dienst eines spezifischen Diensttyps zu verarbeiten, wobei das Verfahren Folgendes umfasst:
Empfangen (101) durch ein erstes anwenderseitiges Dienstkonvergenzmodul aus dem einen oder den mehreren anwenderseitigen Dienstkonvergenzmodulen von Aufwärtsstreckendienstdaten von einem Anschluss der anwenderseitigen Vorrichtung, wobei die Aufwärtsstreckendienstdaten Aufwärtsstreckendienstdaten eines Diensttyps sind, der einem Diensttyp entspricht, der durch das erste anwenderseitige Dienstkonvergenzmodul verarbeitet wird; und wobei das Verfahren durch Folgendes gekennzeichnet ist:
Erfassen (102) durch das erste anwenderseitige Dienstkonvergenzmodul einer MAC-Adresse einer Anwendervorrichtung, Kennungsinformationen eines Netzes und Kennungsinformationen eines netzseitigen Dienstkanals gemäß den empfangenen Aufwärtsstreckendienstdaten, und Aufbauen einer Abbildung zwischen einer Kennung eines anwenderseitigen Dienstkanals und der MAC-Adresse der Anwendervorrichtung, den Kennungsinformationen des Netzes und den Kennungsinformationen des netzseitigen Dienstkanals; und
Einkapseln (103) durch das erste anwenderseitige Dienstkonvergenzmodul der Aufwärtsstreckendienstdaten und Senden der eingekapselten Aufwärtsstreckendienstdaten über den netzseitigen Dienstkanal zu einem optischen Leitungsterminal, OLT, das mit dem ersten anwenderseitigen Dienstkonvergenzmodul verbunden ist, wobei der netzseitige Dienstkanal ein Kanal zum Übertragen des Dienstes des spezifischen Diensttyps zwischen dem ersten anwenderseitigen Dienstkonvergenzmodul der anwenderseitigen Vorrichtung und dem OLT, das damit verbunden ist, ist;
Empfangen (201) durch das erste anwenderseitige Dienstkonvergenzmodul von Abwärtsstreckendienstdaten über einen netzseitigen Dienstkanal von dem OLT, wobei der netzseitige Dienstkanal verwendet wird, um Dienstdaten des spezifischen Diensttyps zwischen dem ersten anwenderseitigen Dienstkonvergenzmodul der anwenderseitigen Vorrichtung und dem OLT zu übertragen;
Entkapseln (202) durch das erste anwenderseitige Dienstkonvergenzmodul der Abwärtsstreckendienstdaten, Erfassen einer MAC-Adresse einer Anwendervorrichtung, Kennungsinformationen eines Netzes und Kennungsinformationen des netzseitigen Dienstkanals gemäß den Abwärtsstreckendienstdaten und Erfassen einer entsprechenden Kennung eines anwenderseitigen Dienstkanals aus einer gespeicherten Abbildung gemäß der MAC-Adresse der Anwendervorrichtung, den Kennungsinformationen des Netzes und den Kennungsinformationen des netzseitigen Dienstkanals, wobei der anwenderseitige Dienstkanal ein Kanal zum Übertragen der Dienstdaten des spezifischen Diensttyps zwischen einem Anschluss der anwenderseitigen Vorrichtung und dem anwenderseitigen Dienstkonvergenzmodul ist; und
Senden (203) durch das erste anwenderseitige Dienstkonvergenzmodul der entkapselten Abwärtsstreckendienstdaten zu dem Anschluss der anwenderseitigen Vorrichtung über den anwenderseitigen Dienstkanal.

2. Übertragungsverfahren nach Anspruch 1, wobei das Verfahren vor dem Empfangen durch das erste anwenderseitige Dienstkonvergenzmodul von Aufwärtsstreckendienstdaten von einem Anschluss der anwenderseitigen Vorrichtung ferner Folgendes umfasst:
Erfassen durch den Anschluss der ersten anwenderseitigen Vorrichtung des Diensttyps gemäß einer Diensteigenschaft der Aufwärtsstreckendienstdaten; und
Senden durch den Anschluss der ersten anwenderseitigen Vorrichtung der Aufwärtsstreckendienstdaten zu dem entsprechenden anwenderseitigen Dienstkonvergenzmodul über den anwenderseitigen Dienstkanal, der dem Diensttyp entspricht.

3. Übertragungsverfahren nach Anspruch 1 oder 2, wobei der Dienst des spezifischen Diensttyps einer oder mehrere aus einem Hochgeschwindigkeits-Internetdienst, einem Internetprotokoll-Fernsehdienst oder einem Sprache-über-Internetprotokoll-Dienst ist.

4. Übertragungsverfahren nach einem der Ansprüche 1 bis 3, wobei das Einkapseln durch das erste anwenderseitige Dienstkonvergenzmodul der Aufwärtsstreckendienstdaten Folgendes umfasst:
Einkapseln durch das erste anwenderseitige Dienstkonvergenzmodul der Aufwärtsstreckendienstdaten in einer Einkapselungsbetriebsart eines passiven optischen Gigabit-Netzes; oder
Einkapseln durch das erste anwenderseitige Dienstkonvergenzmodul der Aufwärtsstreckendienstdaten in einer Betriebsart mit logischer Verbindungsstreckenkennung.

5. Übertragungsverfahren nach einem der Ansprüche 1 bis 4, wobei die anwenderseitige Vorrichtung eine optische Netzeinheit, ONU, oder eine optische Netzabschlusseinheit, ONT, ist.

6. Computerprogrammprodukt, das einen Computerprogrammcode umfasst, wobei dann, wenn eine Computereinheit den Computerprogrammcode ausführt, die Computereinheit das Verfahren nach einem der Ansprüche 1 bis 5 ausführt.

## Revendications

1. Procédé de transmission de données dans un réseau optique passif, un ou plusieurs modules de convergence de service côté utilisateur étant disposés dans un dispositif côté utilisateur, un module de convergence de service côté utilisateur étant configuré pour traiter un service d'un type de service spécifique, le procédé étant **caractérisé en ce qu'**il comprend :
recevoir (101), par un premier module de convergence de service côté utilisateur des un ou plusieurs modules de convergence de service côté utilisateur, des données de service de liaison montante à partir d'un port du dispositif côté utilisateur, les données de service de liaison montante étant des données de service de liaison montante d'un type de service correspondant à un type de service traité par le premier module de convergence de service côté utilisateur ; et étant **caractérisé par** les étapes suivantes :
acquérir (102), par le premier module de convergence de service côté utilisateur, une adresse MAC d'un dispositif utilisateur, des informations d'identifiant d'un réseau et des informations d'identifiant d'un canal de service côté réseau selon les données de service de liaison montante reçues, et établir un mappage entre un identifiant d'un canal de service côté utilisateur et l'adresse MAC du dispositif utilisateur, les informations d'identifiant du réseau, et les informations d'identifiant du canal de service côté réseau ; et
encapsuler (103), par le premier module de convergence de service côté utilisateur, les données de service de liaison montante, et envoyer les données de service de liaison montante encapsulées par l'intermédiaire du canal de service côté réseau à un terminal de ligne optique, OLT, connecté au premier module de convergence de service côté utilisateur, le canal de service côté réseau étant un canal destiné à transmettre le service du type de service spécifique entre le premier module de convergence de service côté utilisateur du dispositif côté utilisateur et l'OLT connecté à celui-ci ;
recevoir (201), par le premier module de convergence de service côté utilisateur, des données de service de liaison descendante par l'intermédiaire d'un canal de service côté réseau à partir de l'OLT, le canal de service côté réseau étant utilisé pour transmettre des données de service du type de service spécifique entre le premier module de convergence de service côté utilisateur du dispositif côté utilisateur et l'OLT ;
décapsuler (202), par le premier module de convergence de service côté utilisateur, les données de service de liaison descendante, acquérir une adresse MAC d'un dispositif utilisateur, des informations d'identifiant d'un réseau et des informations d'identifiant du canal de service côté réseau selon les données de service de liaison descendante, et acquérir un identifiant correspondant d'un canal de service côté utilisateur à partir d'un mappage stocké selon l'adresse MAC du dispositif utilisateur, les informations d'identifiant du réseau et les informations d'identifiant du canal de service côté réseau, le canal de service côté utilisateur étant un canal destiné à transmettre les données de service du type de service spécifique entre un port du dispositif côté utilisateur et le module de convergence de service côté utilisateur ; et
envoyer (203), par le premier module de convergence de service côté utilisateur, les données de service de liaison descendante décapsulées au port du dispositif côté utilisateur par l'intermédiaire du canal de service côté utilisateur.

2. Procédé de transmission selon la revendication 1 dans lequel, avant l'étape consistant à recevoir, par le premier module de convergence de service côté utilisateur, des données de service de liaison montante à partir d'un port du dispositif côté utilisateur, le procédé comprend en outre :
acquérir, par le port du premier dispositif côté utilisateur, le type de service selon une caractéristique de service des données de service de liaison montante ; et
envoyer, par le port du premier dispositif côté utilisateur, les données de service de liaison montante au module de convergence de service côté utilisateur correspondant par l'intermédiaire du canal de service côté utilisateur correspondant au type de service.

3. Procédé de transmission selon la revendication 1 ou 2, dans lequel le service du type de service spécifique est un ou plusieurs services parmi un service Internet à grande vitesse, un service de télévision sur IP et un service voix sur IP.

4. Procédé de transmission selon l'une quelconque des revendications 1 à 3, dans lequel l'étape consistant à encapsuler, par le premier module de convergence de service côté utilisateur, les données de service de liaison montante comprend :
encapsuler, par le premier module de convergence de service côté utilisateur, les données de service de liaison montante dans un mode d'encapsulation de réseau optique passif gigabit ; ou
encapsuler, par le premier module de convergence de service côté utilisateur, les données de service de liaison montante dans un mode d'identifiant de liaison logique.

5. Procédé de transmission selon l'une quelconque des revendications 1 à 4, dans lequel le dispositif côté utilisateur est une unité de réseau optique ONU ou un terminal de réseau optique ONT.

6. Produit programme d'ordinateur, comprenant un code de programme informatique, une unité d'ordinateur mettant en oeuvre le procédé selon l'une quelconque des revendications 1 à 5 lorsqu'elle exécute le code de programme informatique.
